(19) **Europäisches Patentamt / European Patent Office / Office européen des brevets**

(11) **EP 2 848 645 B1**

(12) **EUROPEAN PATENT SPECIFICATION**

(45) Date of publication and mention of the grant of the patent:
**24.04.2019 Bulletin 2019/17**

(51) Int Cl.:
*C08K 9/06* (2006.01)  *H01B 3/40* (2006.01)
*C08K 3/22* (2006.01)  *C08K 3/38* (2006.01)
*C08K 3/36* (2006.01)  *H01F 5/06* (2006.01)
*H02K 3/30* (2006.01)  *C08L 63/00* (2006.01)

(21) Application number: **14184469.6**

(22) Date of filing: **11.09.2014**

(54) **Resin composition for electric insulation and its hardened products, as well as coils, stators and rotary machines using the products**

Harzzusammensetzung für elektrische Isolierung und deren gehärteten Produkte, sowie Spulen, Statoren und Rotationsmaschinen, die diese Produkte verwenden

Composition de résine pour l'isolation électrique et de ses produits durcis, ainsi que des bobines, stators et machines rotatives utilisant ces produits

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2013 JP 2013187882**
**19.09.2013 JP 2013193650**

(43) Date of publication of application:
**18.03.2015 Bulletin 2015/12**

(73) Proprietor: **Mitsubishi Hitachi Power Systems, Ltd.**
**Yokohama 220-8401 (JP)**

(72) Inventors:
• **Otowa, Takuya**
**Tokyo,, Kanagawa 100-8280 (JP)**
• **Morita, Hiroshi**
**Tokyo,, Kanagawa 100-8280 (JP)**
• **Ohtake, Atsushi**
**Tokyo,, Kanagawa 100-8280 (JP)**
• **Kobayashi, Kinya**
**Tokyo,, Kanagawa 100-8280 (JP)**
• **Suzuki, Keiji**
**Yokohama-shi,, Kanagawa 220-8401 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 2 058 366**    **DE-A1-102009 039 457**
**DE-A1-102009 053 253**    **US-A1- 2010 297 453**
**US-A1- 2012 061 125**    **US-A1- 2013 131 218**

• **DATABASE WPI Week 199409 Thomson Scientific, London, GB; AN 1994-072083 XP002738188, & JP H06 25512 A (SUMITOMO BAKELITE CO) 1 February 1994 (1994-02-01)**

**Description**

TECHNICAL FIELD:

The present invention relates to a resin composition for an electric insulation and its hardened products, as well as coils, stators, rotary machines and high voltage equipment using them.

BACKGROUND ART:

In high voltage equipment typically represented by molded transformers, switch gears, inverters, motors and generators, improvement of efficiency by size-reduction has been proceeded with a view point of energy saving and resource saving.

In insulation systems applied to high voltage equipment, composite materials using insulation resins have been used. Along with progress of the size-reduction of high voltage equipment, problems of cracks and deterioration of insulation occur due to the reduction in the wall thickness of insulation layers. Accordingly, it is indispensable to further improve electric characteristics and mechanical characteristics of the insulation resins.

In this text, the electric characteristics mean a time to a dielectric breakdown when a high voltage is applied to an insulation material, and the mechanical characteristics mean fracture toughness values. The electric characteristics and the mechanical characteristics are also collectively referred to as "electric and mechanical characteristics".

For the improvement of the electric and mechanical characteristics, use of a resin material with addition of fine particles to a resin is effective. Particularly, a fine particle with a particle diameter of 200 nm or less has a large surface area relative to the volume of the fine particle and is expected to improve the characteristics of the resin by addition of a small amount of fine particles.

Hereinafter, a silica particle having a mean particle diameter of 200 nm or less is referred to as "nano-silica".

Whenahydrophilicnano-silicanotyet treatedat the particle surface is added to an insulation resin, the nano-silica is dispersed uniformly in the resin. On the other hand, when a hydrophobized nano-silica is added to the insulation resin, the nano-silica forms a plurality of threadlike agglomerates in the resin to form a dendritic structure. This is disclosed in Japanese Patent Application Laid-Open No. 2012-057121 (Patent Literature 1). Patent Literature 1 describes that when the nano-silica has the dendritic structure, the structure has higher effect of suppressing insulation deterioration and development of cracks and improves the electric and mechanical characteristics of the insulation material compared with the structure in which fine particles are dispersed uniformly.

On the other hand, for the insulation deterioration, there is a problem of thermal deterioration of the resin. This may sometimes cause fracture of the resin.

Japanese Patent Application Laid-Open No. 2000-224792 (Patent Literature 2) discloses a rotary electric machine having an insulation layer in which a highly heat conductive resin material is dispersed in a resin with an aim of decreasing the necessary thickness or volume of an insulation material and rendering the rotary electric machine compact and decreasing the cost. Patent Literature 2 describes that the highly heat conductive insulation material having a thermal conductivity of 5 W/(m • K) or higher includes boron nitride, aluminum nitride, silicon nitride, aluminum oxide, magnesium oxide, beryllium oxide, silicon carbide, etc. and aluminum oxide, boron nitride, magnesium oxide, etc. having a thermal conductivity of 30 W/(m • K) or higher and a volume resistance of $10^{13}$ $\Omega$cm or higher particularly preferred, and that the highly heat conductive insulation materials are used in the form of particles with a mean particle diameter of 20 $\mu$m or less.

Japanese patent application laid open number H06 25512 A discloses a resin composition according to the preamble of claim 1.

SUMMARY OF THE INVENTION:

In view of the above problem, the present invention provides a resin composition having the features defined in claim 1. A further preferred embodiment'of the resin composition is defined in claim 2. Moreover, it is provided a coil which has the features defined in claim 3; preferred embodiments of the coil are defined in claims 4 to 6. It is moreover provided a stator having the inventive coil in accordance with claim 7, and in accordance with claim 8 it is provided a rotary machine having the inventive coil.

BRIEF DESCRIPTION OF THE DRAWINGS:

Fig. 1 is an SEM image showing a cross section of a hardened resin of Example 1;

Fig. 2 is a graph illustrating a viscosity of a liquid mixture at 40°C before hardening in Examples 1 and 2 and Comparative Examples 1, 2, and 5;

Fig. 3A is a side elevational view illustrating a shape of a sample used for a dielectric breakdown test;

Fig. 3B is an upper plan view illustrating a shape of the sample used for the dielectric breakdown test;

Fig. 4 is a graph illustrating a result of evaluation for electric characteristics in Examples 1 and 2 and Comparative Examples 1, 2, and 5;

Fig. 5 is a perspective view illustrating a shape of a sample used for a three-point bending test and an outline of the three-point bending test;

Fig. 6 is a graph illustrating the viscosity at 60°C of the liquid mixture before hardening in Examples 3 to 5 and Comparative Examples 3, 4, and 6;

Fig, 7 is a conceptional view illustrating a structure formed with highly heat conductive fillers and fine particles inside a hardened resin, as well as highly heat conductive paths;

Fig. 8A is a schematic view illustrating a cross section of a stator coil;

Fig. 8B is a schematic view illustrating a fine structure of an insulation material for an enlarged portion at a cross section of the stator coil;

Fig. 9 is a conceptional cross sectional view illustrating a fine structure of an insulation material according to the present invention;

Fig. 10 is a conceptional view illustrating an arrangement of nano
particles and a highly heat conductive material inside the insulation material;

Fig. 11A is a conceptional view illustrating an arrangement of nano particles and atoms constituting the highly heat conductive material inside the insulation material, as well as inter-atomic distances of the atoms;

Fig. 11B is a graph showing a relation between the displacement of the inter-atomic distance in Fig. 11A and an intermolecular bond energy of a six-membered ring structure;

Fig. 12 is a conceptional view illustrating an arrangement of atoms constituting the highly heat conductive material of the present invention;

Fig. 13A is a conceptional view illustrating an arrangement of atoms constituting the nano particles according to the present invention;

Fig. 13B is a conceptional view illustrating an arrangement of atoms constituting the nano particles according to the present invention;

Fig. 14A is a conceptional view illustrating a bonding structure of the highly heat conductive material and the nano particles of the present invention;

Fig. 14B is a conceptional view illustrating a bonding structure of the highly heat conductive material and the nano particles of the present invention;

Fig. 14C is a conceptional view illustrating a bonding structure between the highly heat conductive materials to each other of the present invention;

Fig. 15 is a graph showing a relation between a particle diameter of a hydrophilic nano-silica and a voltage endurance lifetime; and

Fig. 16 is a graph showing a relation between a particle diameter of a hydrophobic nano-silica and a voltage endurance lifetime.

DETAILED DESCRIPTION OF THE PREFERRED EMBODIMENTS:

In the insulation material of Patent Literature 1, since the surface of the fine particles added to the resin is hydrophobized with methyl groups to remarkably lower the polarity and since the hydrophobing ratio is high, viscosity of a liquid mixture increases remarkably even when the addition amount of the fine particles is small. Accordingly, there was a room for improvement in that the production efficiency is lowered when the material is applied to high voltage equipment.

On the other hand, for the particles of highly heat conductive insulation material described in Patent Literature 2, no details other than the particle diameter are shown.

The present invention intends to compatibilize the improvement in the electric characteristics and mechanical characteristics of the hardened insulation product and the suppression of the viscosity of the resin composition.

Preferred embodiments of the present invention are to be described below. Embodiments to be described below are merely embodied examples of the present invention and they do not restrict the technical range of the present invention.

The resin composition for electric insulation of the present invention includes at least an epoxy resin (main agent), a hardening agent, and fine particles . After vacuum-degassing a thixotropic liquid mixture obtained by stirring them, the composition is hardened by being heated at a predetermined temperature for a predetermined time to obtain a hardened resin for electric insulation. Hereinafter, the resin composition before hardening and the hardened resin after hardening are sometimes referred to as "insulation material".

For improving various characteristics of the insulation material, additives may be added further to the liquid mixture.

The insulation material of the present invention is applied, for example, to an insulation layer at the periphery of a stator coils in a rotary machine. The insulation layer is formed, for example, by two methods, that is, a resin impregnation method of impregnating a tape wound around conductors of stator coils with a liquid mixture and then thermally hardening the same to form an insulation layer and a resin-rich method of winding a tape pre-coated with a liquid mixture around coil conductors and thermally hardening the same to form an insulation layer. Both of the methods are applicable in the present invention.

The tape described above includes at least mica and a reinforcing material. The reinforcing material is a member for reinforcing the insulation layer, typically, a glass cloth. Other examples of the reinforcing material include, for example, a non-woven glass fabric, a non-woven polyester fabric, a polyester film, and a polyimide film. Mica serves to improve the electric characteristics, the mechanical characteristics, and the thermal conductivity of the insulation layer. In addition, the tape may also include a hardening agent, a filler, etc.

With the view point of the production efficiency, the liquid mixture preferably has a viscosity at 40°C of 0.1 p.u. or more, and less than 5 p.u. in a case of using the resin impregnation method, and a viscosity at 60°C of 0.1 p.u. or more and less than 1000 p.u. in the case of using the resin-rich method, when the viscosity is standardized by assuming the viscosity of a liquid mixture of Comparative Example 2 to be described later (bisphenol A epoxy resin solution with addition of 10 mass% of hydrophilic nano-silica) being as a standard (1.0).

As the epoxy resin of the present invention, any epoxy compound may be used so long as the compound contains two or more epoxy groups each including two carbon atoms and one oxygen atom in one molecule and the epoxy groups can be put to ring-opening reaction by an appropriate hardening agent to form a hardened resin. Preferred example of the epoxy resin can include, for example, bisphenol A type epoxy resin obtained by condensation of epichlorohydrin and polyhydric phenols such as bisphenols or polyhydric alcohol, brominated bisphenol A epoxy resin, hydrogenated bisphenol A epoxy resin, bisphenol F epoxy resin, bisphenol S epoxy resin, bisphenol AF epoxy resin, biphenyl epoxy resin, naphthalene epoxy resin, fluorene epoxy resin, novolac epoxy resin, phenol novolac epoxy resin, ortho-cresol novolac epoxy resin, tris (hydroxyphenyl) methane epoxy resin, glycidyl ether epoxy resin such as tetraphenylol ethane type epoxy resin, glydicyl ester epoxy resin obtained by condensation of epichlorohydrin and carboxylic acid, and heterocyclic epoxy resin such as hydantoin epoxy resin obtained by reaction of triglycidyl isocyanate or epichlorohydrin and hydantoins. The resins may be used alone or as a mixture of two or more of them.

As the hardening agent in the present invention, any compound that can cause an appropriate epoxy resin to take place ring opening reaction into a hardened resin may be used. Specifically, preferred examples include amine compounds such as aliphatic polyamines, cycloaliphatic polyamines, aromatic polyamines, and polyaminoamides; and acid anhydride compounds such as cycloaliphatic acid anhydrides.

The fine particle in the present invention contains a metal oxide having a mean particle diameter at a nanometer order as a base material, hydrophilic groups such as hydroxyl groups present on the surface of the base material being modified with a silane coupling agent. That is, the fine particle has the hydrophobic group such as an alkyl group or a fluoroalkyl group in which the surface of the base material is modified by a silane coupling agent having a reactive group such as a methoxy group or an ethoxy group that causes condensation reaction with the hydrophilic group such as a hydroxyl group. By adjusting the amount of the silane coupling agent, a portion of the hydroxyl groups can be left on the surface of the base material. Thus, the hydrophilic groups and the hydrophobic groups can be present together on the surface of the base material.

Preferred specific example of the base material includes, for example, silica (silicon dioxide), alumina (aluminum oxide), titania (titanium oxide), and boron nitride . The mean particle diameter of the fine particle is preferably from 5 to 200 nm and, more preferably, from 5 to 100 nm. They can be applied alone or as a mixture of two or more of them. A preferred modifying group for the surface of the fine particle is an alkyl group of 1 to 8 carbon atoms that is a hydrophobic group.

When the base material of the fine particle is boron nitride, an oxidation treatment such as heating of the base material of the fine particle in an atmospheric air may also be applied for adding the hydrophilic groups to the surface.

The existent ratio of the hydrophobic groups at the surface of the particle is represented by a hydrophobing ratio (mol%) defined by the following formula (1):

$$\text{Hydrophobing ratio (mol\%)} = 100 \left\{ M_A / (M_A + M_{OH}) \right\} \quad \dots(1)$$

In the formula, $M_A$ is a mol number of the hydrophobic groups at the surface of the particle and $M_{OH}$ is a mol number of the hydrophilic group at the surface of the particle. $M_A$ and $M_{OH}$ can be calculated based on quantitative spectroscopy of Si-NMR.

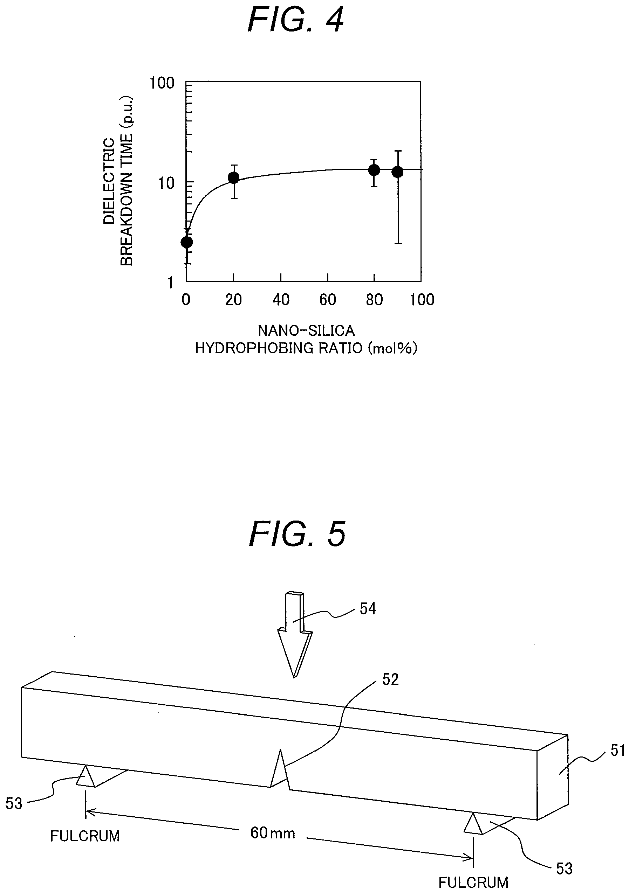

The hydrophobing ratio is preferably from 20 to 80 mol%. If it is less than 20 mol%, this increases the affinity of the particle surface with the epoxy resin having the epoxy group which is a hydrophilic functional group, so that the particles do not form the dendritic structure in the resin but are dispersed uniformly failing to obtain sufficient electric and mechanical characteristics. If the hydrophobing ratio is 90 mol% or more, the affinity between the particle surface and the epoxy resin is remarkably lowered to increase the viscosity. In an optimum region of from 20 to 80 mol%, fine particles form the dendritic structure in the resin and, concurrently, the viscosity of the liquid mixture can be kept low. In view of the result of the parameter survey shown in Fig. 4 to be described later, it has been known that the dielectric breakdown time is shortened as the hydrophobing ratio is lowered. In other words, the electric characteristics are deteriorated. The mechanical characteristics are also deteriorated.

The addition amount of the fine particles to the epoxy resin is preferably from 3 to 15 mass%. If it is more than 15 mass%, the viscosity before hardening becomes excessively high. On the other hand, if it is less than 3 mass%, no desired electric and mechanical characteristics can be obtained. Further, the range of the addition amount of the fine particles is more preferably from 5 to 15 mass%.

The additives in the present invention include, for example, a highly heat conductive filler with an aim of improving the thermal conductivity of the insulation material and a core-shell type filter with an aim of improving the mechanical characteristics of the insulation material. Preferred examples of the highly heat conductive filler include, specifically, boron nitride, aluminum nitride, and alumina. The shape of the filler may be any of spherical, acicular, or flat shape and the aspect ratio of the longitudinal size (major axis) and the shorter size (minor axis) of the filler is preferably from 1 to 10 and the shorter size (minor axis size) is preferably from 0.1 to 10 $\mu$m.

Addition of the highly heat conductive filler as the additive forms a structure where the threadlike agglomerates of the particles connect the highly heat conductive fillers to each other in the hardened resin.

In the present specification, "additives" mean those having a large particle diameter not applied with a surface treatment such as hydrophobization or hydrophilization, which are distinguished from "fine particles" having a particle diameter at a nanometer order and applied with a surface treatment.

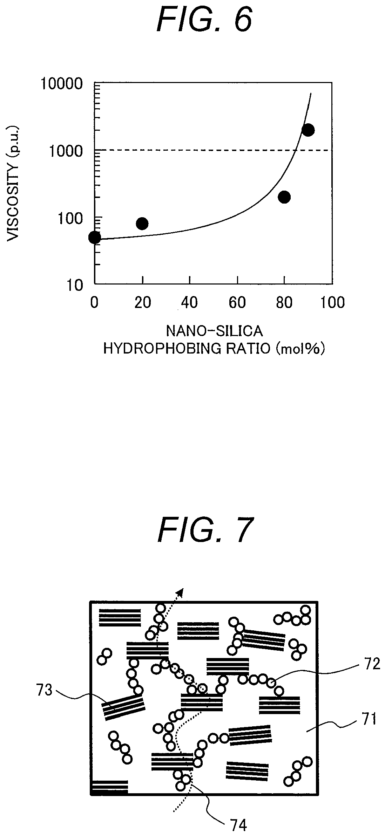

Fig. 7 illustrates a conceptional fine structure of ahardened resin.

In the drawing, a hardened resin 71 is mixed with fine particles 72 and highly heat conductive fillers 73. The highly heat conductive filler 73 may be mica.

Both the fine particles 72 and the highly heat conductive filler 73 have a thermal conductivity higher than that of the epoxy resin. Accordingly, a highly heat conductive path (highly heat conductive path 74) is formed due to composition of the fine particles 72 and the highly heat conductive fillers 73 in the hardened resin 71. As a result, the thermal conductivity of the entire hardened resin 71 is improved more compared with a case where the fine particle 72 or the highly heat conductive filler 73 is not present.

[Example 1]

45 mass parts of a bisphenol A epoxy resin, 45 mass parts of an acid anhydride hardening agent, and 10 mass parts of nano-silica were provided, and they were heated and stirred sufficiently to prepare a thixotropic liquid mixture. The nano-silica has a mean primary particle diameter of 12 nm and modified with methyl groups to a hydrophobing ratio of 80 mol%.

When the viscosity of the liquid mixture at 40°C was measured by a cone-plate viscometer, it was less than 5 p.u. in a flow field at a shearing rate of 10 (1/s) or more and less than 100 (1/s). After vacuum-degassing, the liquid mixture was heated at a predetermined temperature for a predetermined time to prepare a hardened resin.

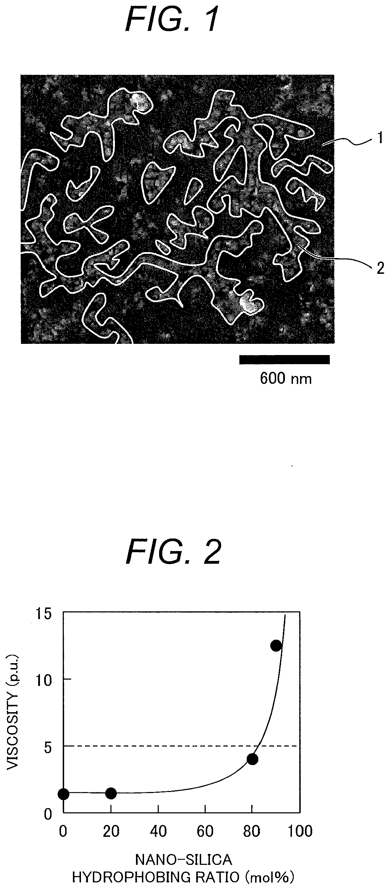

Fig. 1 illustrates a cross sectional SEM image of the hardened resin of this example.

As illustrated in Fig. 1, a nano-silica agglomerate 2 is formed in the hardened resin 1. The agglomerate 2 has a fine threadlike shape which is in a state where a plurality of threadlike segments are dendritically assembled. In other words, the agglomerates 2 have an isometric dendritic structure. In view of the graph, it can be seen that the threadlike portion has a width of about 100 to 200 nm and a length of 500 to 2000 nm.

[Example 2]

A liquid mixture was prepared in the same manner as in Example 1 by changing only the hydrophobing ratio of nano-silica. In this example, the hydrophobing ratio was 20 mol%. In the same manner as in Example 1, a hardened resin was prepared from the liquid mixture.

When the viscosity of the liquid mixture was measured under the same conditions as those in Example 1, it was less than 5 p.u. The nano-silica in the hardened resin isometrically formed a plurality of threadlike agglomerates and had a dendritic structure.

[Example 3]

85 mass parts of a phenpl novolac epoxy resin, 5 mass parts of an aliphatic polyamine hardening agent, and 10 mass parts of nano-silica were provided, and they were heated and stirred sufficiently to prepare a thixotropic liquid mixture . The nano-silica had a mean primary particle diameter of 12 nm and was modified with methyl groups to a hydrophobing ratio of 80 mol%.

When the viscosity of the liquid mixture at 60°C was measured by an E-type viscometer, it was less than 1000 p.u. in a flowing field at a shearing rate of 10 (1/s) or more and less than 100 (1/s). After vacuum-degassing the liquid mixture, it was heated at a predetermined temperature for a predetermined time to prepare a hardened resin. The nano-silica in the hardened resin isometrically formed a plurality of threadlike agglomerates and had a dendritic structure in the same manner as in Example 1.

[Example 4]

A liquid mixture was prepared in the same manner as in Example 3 by changing only the hydrophobing ratio of the nano-silica. In this example, the hydrophobing ratio was 20 mol%. In the same manner as in Example 3, a hardened resin was prepared from the liquid mixture.

When the viscosity of the liquid mixture was measured under the same conditions as those in Example 3, the viscosity was less than 1000 p.u. The nano-silica in the hardened resin isometrically formed a plurality of threadlike agglomerates and had a dendritic structure.

[Example 5]

A liquid mixture similar to that of Example 3 was prepared by further adding 20 mass parts of boronnitride particles . The mean particle diameter of the boron nitride particles was about 10 $\mu$m. A hardened resin was prepared by using the liquid mixture.

When the viscosity of the liquid mixture was measured under the same conditions as those in Example 3, it was less than 1000 p.u. The nano-silica in the hardened resin isometrically formed a plurality of threadlike agglomerates and had a dendritic structure. That is, the nano-silica had a structure similar to the structure shown in Fig. 7 that threadlike nano-silica agglomerates connected the boron nitride particles.

[Example 6]

This example relates to a stator coil of a rotary machine.

First, a tape including a glass cloth and a reconstituted mica sheet was wound around a stator coil of a rotary machine. By dipping the coil in the liquid mixture of Example 1 filled in a resin impregnation tank, the tape layer around the coil was impregnated with the liquid mixture. The coil was taken out of the resin impregnation tank and heated and pressurized at a predetermined temperature and a pressure for a predetermined time. Thus an insulation layer was formed at the periphery of the coil conductor.

When the cross section of the insulation layer of the stator coil and that of the surrounding insulation layer were observed, it was formed of three layers, that is, a resin layer mainly formed of a hardened resin, a reinforcing layer mainly formed of a glass cloth and a hardened resin, and a mica layer mainly formed of a mica sheet and the hardened resin. The nano-silica in the hardened resin in each of the layers isometrically formed a plurality of threadlike agglomerates and hada dendritic structure .

[Example 7]

This example also relates to a stator coil of the rotary machine.

A tape was prepared by attaching a glass cloth coated with the liquid mixture of Example 3 on a reconstituted mica sheet. The tape was wound around a stator coil conductor of a rotary machine and heated and pressurized at predetermined temperature and a pressure for a predetermined time to form an insulation layer at the periphery of the coil conductor. When the cross section of the insulation layer was observed, it was formed of three layers, that is, a resin layer mainly including a hardened resin, a reinforcing layer including a glass cloth and a hardened resin, and a mica layer including a mica sheet and the hardened resin. The nano-silica in the hardened resin in each of the layers isometrically formed a plurality of threadlike agglomerates and had a dendritic structure.

[Example 8]

A tape and an insulation layer at the periphery of coil conductor were prepared by using the liquid mixture of the Example 5 under the same conditions as those in Example 7. When the cross section of the resin layer was observed, the layer was formed of three layers, that is, a resin layer mainly including a hardened resin, a reinforcing layer including a glass cloth and the hardened resin, and a mica layer including a mica sheet and the hardened resin. The nano-silica in the hardened resin of each of the layers isometrically formed a plurality of threadlike agglomerates and had a dendritic structure. The hardened resin of the resin layer and the reinforcing layer had a structure that the threadlike nano-silica agglomerates connected boron nitride particles as illustrated in Fig. 7. The mica layer had a structure that the threadlike nano-silica agglomerates connected boron nitride and mica.

(Comparative Example 1)

A liquid mixture was prepared in the same manner as in Example 1 by changing only the hydrophobing ratio of the nano-silica in Example 1 to 90 mol% to prepare a hardened resin. When the viscosity of the liquid mixture was measured under the same conditions as those in Example 1, the viscosity was 5 p.u. or more. The nano-silica in the hardened resin formed a plurality of threadlike agglomerates and had a dendritic structure .

(Comparative Example 2)

A liquid mixture was prepared in the same manner as in Example 1 by changing only the hydrophobing ratio of the nano-silica in Example 1 to 0 mol% to prepare a hardened resin. When the viscosity of the liquid mixture was measured under the same conditions as those in Example 1, the viscosity was less than 5 p.u. The nano-silica in the hardened resin was dispersed uniformly.

(Comparative Example 3)

A liquid mixture was prepared in the same manner as in Example 3 by changing only the hydrophobing ratio of the nano-silica in Example 3 to 90 mol% to prepare a hardened resin. When the viscosity of the liquid mixture was measured under the same conditions as those in Example 3, the viscosity was 1000 p.u. or more. The nano-silica in the hardened resin isometrically formed a plurality of threadlike agglomerates and had a dendritic structure.

(Comparative Example 4)

A liquid mixture was prepared in the same manner as in Example 3 by changing only the hydrophobing ratio of the nano-silica in Example 3 to 0 mol% to prepare a hardened resin. When the viscosity of the liquid mixture was measured under the same conditions as those in Example 3, the viscosity was less than 1000 p.u.. The nano-silica in the hardened resin was dispersed uniformly.

(Comparative Example 5)

A liquid mixture was prepared in the same manner as in Example 1 by removing the nano-silica in Example 1 to prepare a hardened resin. When the viscosity of the liquid mixture was measured under the same conditions as those in Example 1, the viscosity was less than 5 p.u.

(Comparative Example 6)

A liquid mixture was prepared in the same manner as in Example 3 by removing the nano-silica in Example 3 to prepare a hardened resin. When the viscosity of the liquid mixture was measured under the same conditions as those in Example 3, the viscosity was less than 1000 p.u.

(Comparative Example 7)

A liquid mixture was prepared in the same manner as in Example 5 by removing the nano-silica from Example 5 to prepare a hardened resin. When the viscosity of the liquid mixture was measured under the same conditions as those in Example 3, the viscosity was less than 1000 p.u.

(Comparative Example 8)

A tape and an insulation layer at the periphery of the coil conductor were prepared by using the liquid mixture of Comparative Example 6 under the same conditions as those in Example 7. When the cross section of the insulation layer was observed, the insulation layer was formed of three layers, that is, a resin layer mainly including the hardened resin, a reinforcing layer including a glass cloth and the hardened resin, and a mica layer including mica sheets and the hardened resin.

(Comparative Example 9)

A tape and an insulation layer at the periphery of the coil conductor were prepared by using the liquid mixture of Comparative Example 7 under the same conditions as those in Example 7. When the cross section of the insulation layer was observed, the insulation layer was formed of three layers, that is, a resin layer mainly including the hardened resin, a reinforcing layer including a glass cloth and the hardened resin, and a mica layer including mica sheets and the hardened resin.

(Comparative Example 10)

A tape and an insulation layer at the periphery of the coil conductor were prepared by using the liquid mixture of Comparative Example 7 under the same conditions as those in Example 7. When the cross section of the insulation layer was observed, the insulation layer included three layers, that is, a resin layer mainly including the hardened resin, a reinforcing layer including the glass cloth and the hardened resin, and a mica layer including mica sheets and the hardened resin.

Fig. 2 shows the result of measurement for the viscosity at 40°C of the liquid mixture of Examples 1 and 2 and Comparative Examples 1, 2, and 5. The abscissa represents a hydrophobing ratio of the nano-silica surface and the ordinate represents a viscosity standardized based on the viscosity of the liquid mixture of Comparative Example 2 being as 1.0.

In view of the graph, it can be seen that the viscosity of the liquid mixture tends to be higher as the hydrophobing ratio of the nano-silica is higher, and the viscosity increases extremely when the hydrophobing ratio exceeds 80 mol%. This is because the affinity between the nano-silica surface and the epoxy resin is lowered. It can be seen that the viscosity can be suppressed to less than 5 p.u. if the hydrophobing ratio is 80 mol% or less.

Fig. 6 shows the result of measurement of the viscosity at 60°C of the liquid mixture of Examples 3 to 5 and Comparative Examples 3, 4, and 6. The abscissa represents the hydrophobing ratio of the nano-silica surface and the ordinate represents a viscosity standardized based on the same standard as that for the ordinate in Fig. 2.

In view of the graph, it can be seen that the viscosity of the liquid mixture tends to be higher as the hydrophobing ratio of the nano-silica is higher and the viscosity increases extremely high when the hydrophobing ratio exceeds 80 mol%. This is because the affinity between the nano-silica surface and the epoxy resin is lowered. It can be seen that the viscosity can be kept to less than 1000 p.u. if the hydrophobing ratio is 80 mol% or less.

Table 1 shows the result of evaluation for the nano-silica structure in the hardened resin of Examples 1 and 2 and Comparative Examples 1, 2, and 5.

[Table 1]

|  | Comp. Example 5 | Comp. Example 2 | Example 2 | Example 1 | Comp. Example 1 |
|---|---|---|---|---|---|
| Addition amount of nano-silica | -- | 10 mass% | 10 mass% | 10 mass% | 10 mass% |
| Hydrophobing ratio of nano-silica | -- | 0 mol% | 20 mol% | 80 mol% | 90 mol% |
| Nano-silica structure | -- | Uniformly dispersed | Dendritic structure | Dendritic structure | Dendritic structure |
| Fracture toughness value (p.u.) | 1.0 | 1.1 | 1.2 | 1.2 | 1.2 |

In view of the table, it can be seen that the nano-silica forms a dendritic structure in the hardened resin at a hydrophobing ratio of 20 mol% or more.

Then, for verifying the electric characteristics of the insulation material, a dielectric breakdown test was performed. Examples 1 and 2 and Comparative Examples 1, 2, and 5 were used as targets for the test. The liquid mixtures of them were respectively cast into metal molds, in which an electrode needle was inserted and the liquid was degassed and hardened under the conditions of Example 1 to prepare samples.

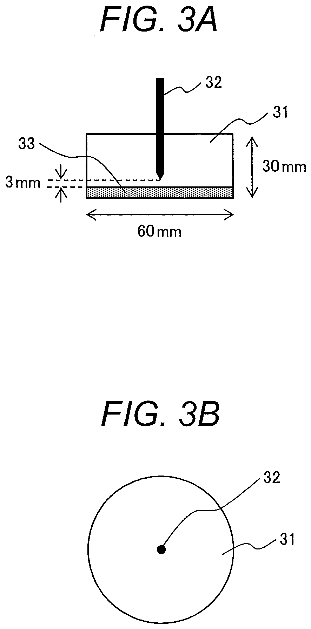

Fig. 3A is a side elevational view illustrating the shape of a sample used in the dielectric breakdown test. Fig. 3B is an upper plan view of the sample.

As illustrated in the drawings, the prepared sample (hardened resin 31) has a columnar shape in which an electrode needle 32 is buried from the upper surface of the sample along a central axis of the hardened resin 31. The electrode needle 32 has a diameter of 1 mm, a center angle at the top end of 30°, a radius of curvature at the top end of 5 $\mu$m. A conductive paint 33 is coated to the bottom of the hardened resin 31 and dried and bonded to the surface of a planar electrode (not illustrated). A distance (gap) between the top end of the electrode needle 32 and a conductive paint 33 is 3 mm.

The sample was immersed in a silicone oil and a voltage at 15 kVrms, and 50 Hz was applied between the electrode needle 32 and the flat plate electrode, and the time till occurrence of dielectric breakdown was measured. Samples were prepared by the number of five for each of conditions and an average value of a dielectric breakdown time was calculated.

Fig. 4 shows the result of evaluation in the dielectric breakdown test. The abscissa represents a hydrophobing ratio on the surface of nano-silica and the ordinate represents a standardized dielectric breakdown time. The dielectric breakdown time on the ordinate is standardized based on the dielectric breakdown time of Comparative Example 5 with no addition of nano-silica being as 1.0.

In view of the graph, it can be seen that the dielectric breakdown time is improved only by 2.5 times that of Comparative Example 5 at the hydrophobing ratio of 0 mol% but the dielectric breakdown time can be improved to 10 times or more that of Comparative Example 5 at a hydrophobing ratio of 20 mol% or more. It is estimated that the characteristics varied greatly at the hydrophobing ratio of 90 mol% or more because the viscosity of the liquid mixture was high and foams in the liquid could not be defoamed sufficiently during vacuum-degassing.

When similar samples were prepared by using the liquid mixtures prepared in Example 3 and 4 and Comparative Examples 3, 4, and 6 and a dielectric breakdown test was performed, similar results were obtained.

Table 2 shows the result.

[Table 2]

|  | Comp. Example 6 | Comp. Example 4 | Example 4 | Example 3 | Example 5 | Comp. Example 3 |
|---|---|---|---|---|---|---|
| Addition amount of nano-silica | -- | 10 mass% | 10 mass% | 10 mass% | 10 mass% | 10 mass% |
| Hydrophobing ratio of nano-silica | -- | 0 mol% | 20 mol% | 80 mol% | 80 mol% | 90 mol% |
| Nano-silica structure | -- | Uniformly dispersed | Dendritic structure | Dendritic structure | Dendritic structure | Dendritic structure |
| Highly heat conductive filler | -- | -- | -- | -- | 20 mass% | -- |
| Fracture toughness value (p.u.) | 1.0 | 1.1 | 1.2 | 1.2 | 1.2 | 1.2 |

In view of the table, it can be seen that, at the hydrophobing ratio of 20 mol% or more, the dielectric breakdown time can be improved up to 10 times or more that of Comparative Example 6 with no addition of the nano-silica.

In order to verify the mechanical characteristics of the hardened resin, a 3-point bending test was performed. Examples 1 and 2 and Comparative Examples 1, 2, and 5 were used as targets of the test. Samples were prepared by casting the liquid mixtures respectively into metal molds and degassed and hardened under the conditions in Example 1.

Fig. 5 is a perspective view illustrating a shape of a test piece used for the 3-point bending test.

As illustrated in the drawing, a test piece 51 has an elongate cuboidal shape and has a notch 52 at an acute angle at a central portion of the longitudinal axis. When the 3-point bending test is performed, a load 54 is applied to a central portion at the upper surface of the test piece 51 in a state in which the notch 52 is downwarded and the test piece is supported on two fulcrums 53. The distance between two fulcrums 53 is 60 mm.

The 3-point bending test was performed according to ASTM D5045 and a fracture toughness value was measured by applying the load 54 till the test piece 51 was broken.

The result is also shown in Table 1.

The fracture toughness was standardized based on the fracture toughness value of a test piece of Comparative Example 5 with no addition of nano-silica being as 1.0.

In view of the table, it can be seen that while the improvement of the fracture toughness value is only 10% at a hydrophobing ratio of 0 mol, the fracture toughness is improved by 20% at a hydrophobing ratio of 20 mol% or more.

When similar test pieces were prepared and the fracture toughness test was performed by using the liquid mixtures prepared in Examples 3, 4 and Comparative Examples 3, 4, and 6, same results were obtained. The result is shown in Table 2.

In view of Table 2, it can be seen that the fracture toughness value is improved by 20% at the hydrophobing ratio of 20 mol% or more compared with Comparative Example 6 with no addition of the nano-silica.

On the other hand, when Example 5 was compared with Comparative Example 7 for the thermal conductivity of the hardened resin, Example 5 had a thermal conductivity 1.5 times as high as that of Comparative Example 7. This is because threadlike nano-silica agglomerates had a structure of connecting boron nitride in the hardened resin of Example 5.

The result described above showed that an insulation material of high electric and mechanical characteristics can be obtained while suppressing the increase of viscosity of the liquid mixture by adding the nano-silica at a hydrophobing ratio of 20 to 80 mol% to the epoxy resin. Further, in a system where highly heat conductive fillers were present, it was shown that an insulation material of higher thermal conductivity can be obtained by adding the hydrophobic nano-silica to the epoxy resin.

A preferred embodiment of the present invention is to be described in view of another aspect.

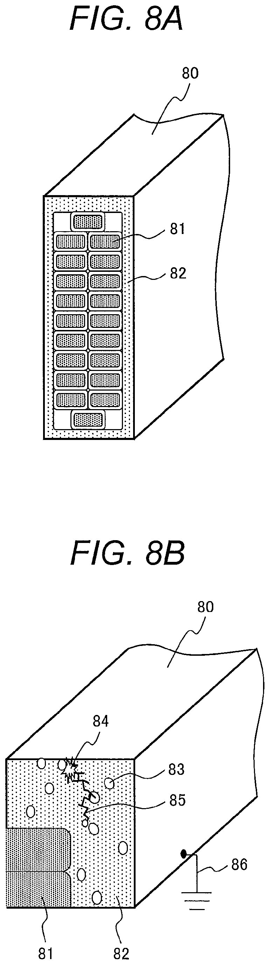

Fig. 8A schematically illustrates a cross section of a stator coil.

In the drawing, a stator coil 80 has a configuration in which a conductor wire 81 (coated strand) is stacked and the entire portion thereof is covered with a dielectric material 82.

Fig. 8B schematically illustrates a fine structure of an insulation material in a partially enlarged cross section of the stator coil.

The drawing illustrates an inner structure of the insulationmaterial 82 covering the periphery of the conductor wire 81. The stator coil 80 is grounded at 86 to the earth.

The insulation material 82 includes voids 83 and cracks 84 may sometimes be originated from the voids 83. The cracks 84 may sometimes result in defects when a high voltage is applied and may generate electrical tree 85 therefrom. The drawing illustrates a state where the electrical trees 85 propagate through the voids 83.

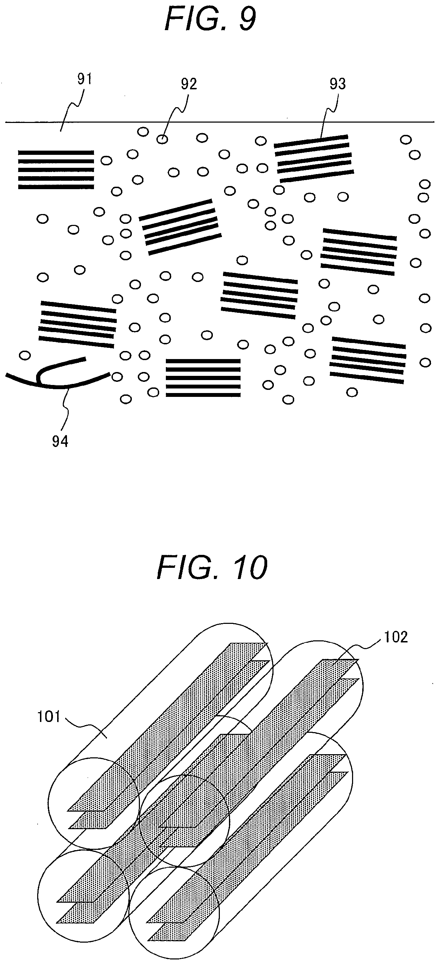

Fig. 9 conceptionally illustrates details of a fine structure of the insulation material of the present invention.

As illustrated in the drawing, nano particles 92 (fine particles) and a highly heat conductive material 93 are mixed in a hardened epoxy resin 91. Even when the tree 94 should occur, since the nano particles 92 or the highly heat conductive materials 93 inhibit propagation of the tree 94, this suppresses dielectric breakdown. In the same manner, propagation of cracks is also prevented.

Fig. 10 conceptionally illustrates an arrangement of nano particles and highly heat conductive material in the inside of the insulation material. In the drawing, the highly heat conductive material 102 intrudes in the inside of the nano particle agglomerates 101.

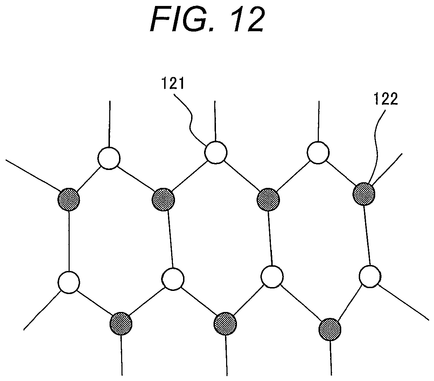

Fig. 12 is a conceptional view illustrating an arrangement of atoms that form the highly heat conductive material of the present invention. The drawing illustrates a case where the highly heat conductive material includes boron nitride.

Boron nitride has a hexagonal shape (honeycomb shape) due to bonding between boron atoms 121 and nitrogen atoms 122.

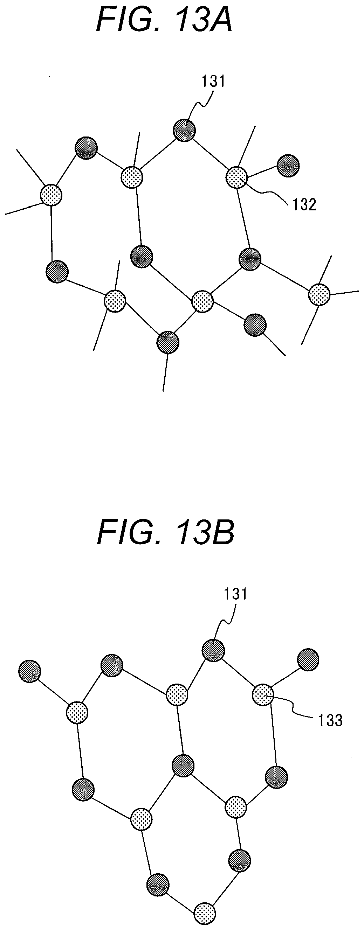

Fig. 13A is a conceptional view illustrating an arrangement of atoms that form a nano particle of the present invention.

Silica has a hexagonal crystal plane due to bonding between oxygen atoms 131 and silicon atoms 132.

Fig. 13B is a conceptional view illustrating an arrangement of atoms that form a nano particle of the present invention.

Alumina has a hexagonal crystal plane due to bonding between the oxygen atoms 131 and aluminum atoms 133.

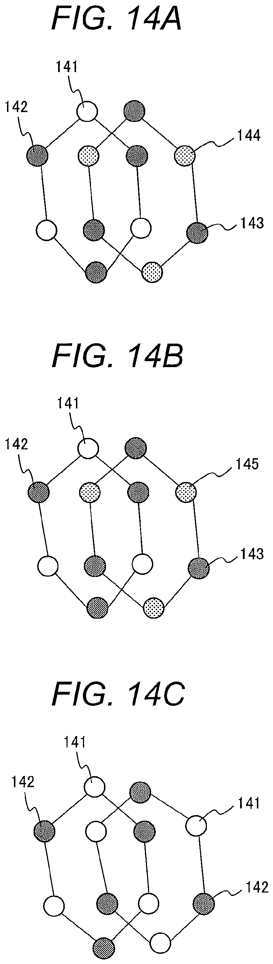

Fig. 14A is a conceptional view illustrating a bonding structure between a highly heat conductive material and a nano particle of the present invention.

Specifically, the drawing shows an arrangement of boron 141, nitrogen 142, oxygen 143, and silicon 144 where boron nitride and silica are adjacent to each other.

Fig. 14B is a conceptional view illustrating a bonding structure of a highly heat conductive material and a nano particle of the present invention.

Specifically, the drawing illustrates an arrangement of boron 141, nitrogen 142, oxygen 143, and aluminum 145 in a case where boron nitride and alumina are adjacent to each other.

Fig. 14C is a conceptional view illustrating a bonding structure between highly heat conductive materials of the present invention with each other.

Specifically, the drawing shows an arrangement of boron 141 and nitrogen 142 in a case where boron nitrides are adjacent to each other.

[Example 9]

An insulation material (hardened resin for electric insulation) includes a highly heat conductive material (boron nitride BN), a reconstituted mica, and a hardened epoxy resin. The hardened epoxy resin contains 5 mass% of hydrophobic nano-silica including $SiO_2$ (silicon oxide) having a 6-membered ring structure identical with that of BN and having a mean particle diameter of 7 nm as a base material. Voltage endurance lifetime and thermal conductivity were evaluated by using the insulation material.

The inter-atomic distance (bonding distance) in the 6-membered ring structure is (0.164 nm) for Si-O and (0.145 nm) for B-N. The difference between the bonding distances is 20% or less.

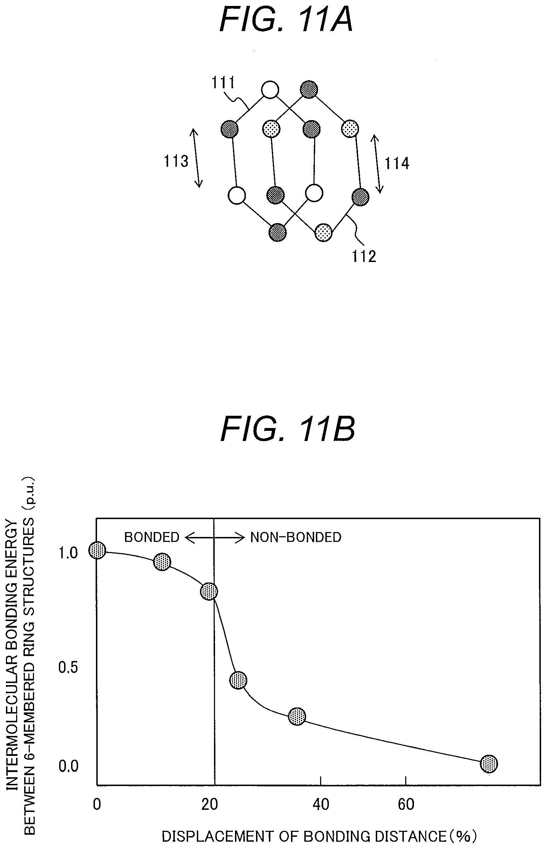

Fig. 11A conceptionally illustrates an arrangement of atoms that form the nano particle and the highly heat conductive material inside the insulation material, and an inter-atomic distance of them.

The drawing illustrates a 6-membered ring 111 that form the highly heat conductive material, a 6-membered ring 112 that forms the nano particle, a bonding distance 113 ($d_1$) between adjacent atoms in the 6-membered ring that forms the highly heat conductive material, and the bonding distance 114 ($d_2$) between adjacent atoms in the 6-membered ring that forms the nano particle.

The displacement of the bonding distances was calculated based on the bonding distances 113 and 114 by numerical calculation. The formula for defining the displacement is represented by the following formula (2).

$$\text{(Displacement of bonding distance)} = \left| (d_1 - d_2)/d_2 \right| \times 100 \qquad \ldots (2)$$

That is, the displacement between the bonding distances is obtained by dividing the difference between the bonding distance 113 and the bonding distance 114 with the bonding distance 114, and an absolute value thereof is calculated and represented by percentage.

Fig. 11B is a graph showing a relation between the displacement of the inter-atomic distance in Fig. 11A and the intermolecular bond energy of the 6-membered ring structure. The abscissa shows the displacement of the bonding distance calculated according to the formula (2), and the ordinate shows the intermolecular bond energy of the 6-membered ring structure.

In view of the graph, it can be seen that the intermolecular bond energy of the 6-membered ring structure is high in a region where the displacement of the bonding distance is 20% or less. This shows that a hydrogen bond is generated. On the other hand, in a region in which the displacement of the bonding distance exceeds 20%, the intermolecular bond energy of the 6-membered ring structure is low, showing that the hydrogen bond is not generated, that is, this is in a non-bonded state.

Bonding between B (boron) and N (nitrogen) of the highly heat conductive material BN (boron nitride) and O (oxygen) and Si (silicon) of the hydrophobic nano-silica is a bond like a hydrogen bond. Thus, intermolecular bonding with the hydrophobic nano-silica on the highly heat conductive material BN (boron nitride) is increased. Accordingly, the distance between the hydrophobic nano-silica and the highly heat conductive material is shortened. Further, since the thermal conductivity of the silica per se that forms the nano-silica is three times as high as that of the epoxy resin, and the nano-silica is distributed in a planar configuration in a network structure (Figs. 9 and 10), thermal conductivity is increased. Accordingly, the thermal conductivity of the entire insulation material can be improved by 1.25 times that of the case of not incorporating the hydrophobic nano-silica.

As a modified example, when a hydrophilic nano-silica is used instead of the hydrophobic nano-silica, resistance to the propagation of the electrical tree and the mechanical cracks of the hardened epoxy resin near the highly heat conductive material BN (boron nitride) can be improved by the increase of the intermolecular bond between the highly heat conductive material BN (boron nitride) and the hydrophilic nano-silica.

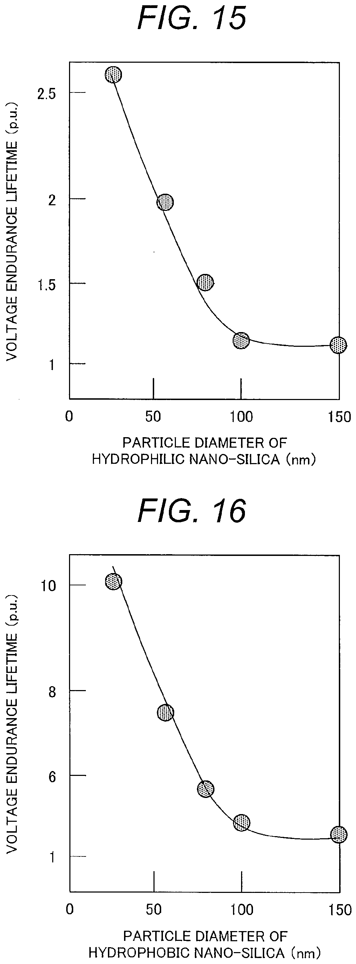

Fig. 15 is a graph illustrating a relation between the particle diameter of a hydrophilic nano-silica and a voltage endurance lifetime.

In view of the graph, it can be seen that the voltage endurance lifetime is improved in a case where the particle diameter is 100 nm or less. When the particle diameter is 25 nm, the voltage endurance lifetime is twice as long as that in the case where the particle diameter is 100 nm.

Fig. 16 is a graph showing a relation between the particle diameter of a hydrophobic nano-silica and a voltage endurance lifetime.

In view of the graph, it can be seen that the voltage endurance lifetime is improved when the particle diameter is 100 nm or less. When the particle diameter is 25 nm, the voltage endurance lifetime is 5 times or more as long as that in the case where the particle diameter is 100 nm.

It can be seen from Figs. 15 and 16 that the voltage endurance lifetime is further improved when the particle diameter is 50 nm or less. Thus, the voltage endurance lifetime and the fracture toughness can be improved.

According to this example, resistance to thermal degradation and electrical fracture of the insulation material of the epoxy resin used for the stator coil of the rotary machine can be improved and the size of the rotary machine can be reduced.

The insulation material of this example is applicable also to generators, motors, transformers, interrupters, converters, or like other high voltage equipment.

[Example 10]

In this example, alumina is used instead of silica in Example 9. That is, a hydrophobic nano-alumina is used. The hydrophobic nano-alumina includes an alumina having a 6-membered ring structure identical with that of the highly heat conductive material BN (boron nitride) and having a mean particle diameter of 12 nm as a base material. The hardened epoxy resin of this example contains such hydrophobic nano-alumina by 5 mass%. The inter-atomic distance (bonding distance) in the 6-membered ring structure is (0.170 nm) for Al-O and (0.145 nm) for B-N. The difference between the bonding distances of them is 20% or less. Bonding between B (boron) and N (nitrogen) of the highly heat conductive material BN (boron nitride) and between O (oxygen) and Al (aluminum) of the hydrophobic nano-alumina is a bond like a hydrogen bond.

Accordingly, the intermolecular bond with the hydrophobic nano-alumina on the highly heat conductive material BN (boron nitride) can be increased. Therefore, the distance between the hydrophobic nano-alumina and the highlyheat conductive material is shortened. Further, since the thermal conductivity of alumina per se that forms the nano-alumina is 50 times as high as that of the epoxy resin and the nano-alumina (Figs. 9 and 10) are distributed in a planar-configuration, the thermal conductivity is increased. Accordingly, the thermal conductivity of the entire insulation material can be improved by 1.5 times compared with the case not incorporating the hydrophobic nano-alumina.

Further, when a hydrophilic nano-alumina is used as a modified example instead of the hydrophobic nano-silica, resistance to the propagation of the electrical tree and the mechanical cracks in the hardened epoxy resin near the highly heat conductive material BN (boron nitride) can be improved due to the increase of the inter-molecular bond between the highly conductive material BN (boron nitride) and the hydrophilic nano-alumina. Accordingly, the voltage endurance lifetime and the fracture toughness can be improved.

According to this example, resistance to the thermal degradation and the electric fracture of the epoxy resin insulation material used for the stator coil of the rotary machine can be improved and the size of the rotary machine can be decreased further than in the case of Example 9.

The insulation material of this example is applicable also to generators, motors, transformers, converters, etc.

[Example 11]

The hardened epoxy resin of this example contains 10 mass% of a hydrophilic nano-silica or a hydrophilic nano-alumina of a mean particle diameter of 12 nm having a 6-membered ring structure identical with that of the highly heat conductive material BN (boron nitride). Other configurations are identical with those of Example 9.

In the same manner as in Examples 9 and 10, the intermolecular bond between the highly heat conductive material BN (boron nitride) and the hydrophilic nano-silica or the hydrophilic nano-alumina is increased and the distance between the hydrophilic nano particle and the highly heat conductive material is shortened. Further, since the thermal conductivity of the nano particle per se is higher than that of the hardened epoxy resin, the thermal conductivity of the entire insulation material can be improved by 10%.

Further, due to increase of the intermolecular bonding between the highly heat conductive material BN (boron nitride) and the hydrophilic nano particle, resistance to the propagation of the electrical tree and the mechanical cracks near the highly heat conductive material BN (boron nitride) can be improved. Thus, the voltage endurance lifetime and the fracture toughness can be improved.

In this example, the heat resistance of the insulation material at high temperature of the epoxy resin used for the stator coil of the rotating equipment can be improved and reliability can be enhanced compared with Examples 9 and 10 when used in the circumstance where the high heat resistance is required for the rotary machines.

The insulation material of this example is applicable also to generators, motors, transformers, converters, etc.

[Example 12]

The hardened epoxy resin of this example contains 5 mass% of a nano-boron nitride of a mean particle diameter of 20 nm and having a 6-membered ring structure identical with that of the highly heat conductive material BN (boron nitride). Other configurations are identical with those of Example 9.

Bonding between B (boron) and N (nitrogen) of the highly heat conductive material BN (boron nitride) and between N (nitrogen) and B (boron) is a bond like a hydrogen bond.

Thus, intermolecular bonding force with the nano-boron hydride on the highly heat conductive material BN (boron nitride) is improved. Accordingly, the distance between the nano-boron nitride and the highly heat conductive material (BN) is shortened. Further, since the thermal conductivity of the boron nitride per se that forms the nano-boron nitride is extremely high compared with that of the epoxy resin, the thermal conductivity of the entire insulation material can be improved by 1.75 times compared with the case of not incorporating the nano-boron nitride.

According to this example, the thermal conductivity of the epoxy resin insulation material used for the stator coil of the rotary machine can be improved remarkably and the size of the rotating equipment can be reduced further compared with that of Examples 9 to 11.

The insulation material of this example is applicable also to generators, motors, transformers, converters, etc.

Hereinafter, Si-O, Al-O, B-N, etc. may be referred to as "adjacent different kind of atom pair" or "adjacent different kind of element pair" .

A difference between an inter-atomic distance (average distance) of different kind of atom pair adjacent in the nano particles (the fine particle) and the inter-atomic distance (average distance) of different kind of element pair in the highly heat conductive filler is preferably within 20%. Thus, intermolecular bonding force between the nano particle and the highly heat conductive material is increased and the nano particles can approach the highly heat conductive material. Thus, the high thermal conductivity of the insulation material can be improved further.

In addition, when a nano-silica or nano-alumina is used as the nano particle, they have a 6-membered ring structure of Si-O-Si-O-Si-O- or Al-O-Al-O-Al-O-. In this case, BN (boron nitride) or alumina is selected for the highly heat conductive material. The most stable structure of them has a 6-membered ring structure of B-N-B-N-B-N- or Al-O-Al-O-Al-O- . As described above, the nano particle and the highly heat conductive material have a 6-membered ring structure and the inter-atomic distance thereof is (0.164 nm) for Si-O, and (0.170 nm) for Al-O, and (0.145 nm) for B-N. Since the inter-atomic distances are substantially identical within 20% for each of the combinations, the intermolecular bonding energy between the 6-membered ring structures of the nano particle and that of the highly heat conductive material increases. Accordingly, the distance between the highly heat conductive material and the nano particle can be decreased. For the combination with the inter-atomic distance of 20% or more it was confirmed by analysis, that the bonding energy between the molecules constituting the highly heat conductive material and the nano particle is remarkably decreased, as shown in Fig. 11B.

In addition, it is preferred to surround the highly heat conductive material with nano particles having a network structure. Thus, the nano particles are distributed in a planar manner to further enhance the thermal conductivity. Further, occurrence of electrical trees and mechanical cracks in the direction perpendicular to the cleaving direction of the highly heat conductive material can be suppressed. Therefore, the voltage endurance lifetime and the fracture toughness can be improved further. Further, by forming the surface of the nano particle with hydrophobic modification groups or hydrophilic modification groups, the structure of the nano particles can be adjusted from the dendritic network type to a dispersion type.

Further, by adding a silane coupling material or a highly dispersing polymer to the resin, the viscosity of the resin rawmaterial canbe decreased and the dispersibility of the nano particles in the resin can be improved.

In addition, the insulation resistance and the mechanical strength of the insulation material can be enhanced by adding laminated mica, reconstituted mica or mica splitting to the resin.

In addition, the thermal conductivity, the voltage endurance lifetime, and the fracture toughness of the coil insulation of a rotor and a stator can be improved by configuring a portion between the conductors of the stator coil of a rotor with the mica, the highly heat conductive material, and the resin, and surrounding the periphery of the mica or the highly heat conductive material with nano-silica, nano-alumina with a mean particle diameter of 200 nm or less, or a mixture thereof, compared with the case of not adding the nano particle.

According to the present invention, resistance to development of the electrical trees and mechanical cracks in a direction perpendicular to the cleaving direction of the hardened insulation material can be improved and the thermal conductivity of the hardened resin other than the highly heat conductive material can be increased concurrently.

Further, according to the present invention, by disposing the nano particle having a thermal conductivity higher than that of the resin and having a mean particle diameter of 200 nm or less to the periphery of the highly heat conductive material contained in the resin, the thermal conductivity of the resin can be improved remarkably compared with a resin not containing the highly heat conductive resin.

Further, according to the present invention, the thermal conductivity of a resin portion other than the portion of the highly heat conductive material can be enhanced to improve the thermal conductivity compared with the case of not containing the nano particle. Furthermore, since the electrical trees and the mechanical cracks in a direction perpendicular to the cleaving direction of the highly heat conductive material can be improved, the voltage endurance lifetime and the fracture toughness of the resin containing the highly heat conductive material can be improved.

**Claims**

1. A resin composition for electric insulation comprising:

   an epoxy resin;
   a hardening agent; and
   fine particles,
   wherein a base material of the fine particle is formed of silicon dioxide, aluminum oxide, titanium oxide, or boron nitride, and
   hydrophilic groups and hydrophobic groups are present together on a surface of the base material,
   **characterized in that**
   a percentage of the fine particles in the resin composition is from 3 to 15 mass%, and
   a hydrophobing ratio represented by the following formula (1) is from 20 to 80 mol%:

$$\text{Hydrophobing ratio (mol\%)} = 100\{M_A/(M_A + M_{OH})\} \quad ...(1),$$

   where $M_A$ is a mol number of hydrophobic groups at the surface of the fine particle, and $M_{OH}$ is a mol number of hydrophilic groups at the surface of the fine particle, so that the fine particles form a plurality of threadlike agglomerates and the agglomerates have a dendritic structure when the epoxy resin, the hardening agent, and the fine particles are mixed and hardened,
   wherein the resin composition further contains a highly heat conductive filler containing at least one of boron nitride, aluminum nitride and alumina .

2. The resin composition for the electric insulation according to claim 1,
   wherein the hydrophilic group is a hydroxyl group and the hydrophobic group is an alkyl group of 1 to 8 carbon atoms.

3. A coil comprising:

   laminated conductive wires; and
   an insulation layer covering the periphery thereof,
   wherein the insulation layer includes a mica layer, a reinforcing material layer and a hardened resin layer,
   the hardened resin layer is a layer formed of a hardened resin for electric insulation having the composition defined in any of claims 1 or 2, said hardened resin for electric insulation is a material formed by mixing and hardening the epoxy resin, the hardening agent, and the fine particles.

4. The coil according to claim 3,
   wherein the hardened resin further contains a highly heat conductive filler.

5. The coil according to claim 3 or 4,
   wherein the mica layer includes reconstituted mica or mica splitting, and the hardened resin.

6. The coil according to any one of claims 4 to 5,
   wherein the reinforcing material layer contains a glass cloth, a non-woven glass fabric, a non-woven polyester fabric, a polyester film, or a polyimide film, and the hardened resin.

7. A stator having the coil according to any one of claims 3 to 6.

8. A rotary machine having the coil according to any one of claims 3 to 7.

**Patentansprüche**

1. Harzgemisch für eine elektrische Isolierung, das umfasst:

   ein Epoxidharz;
   ein Härtungsmittel; und
   feine Teilchen,
   wobei ein Basismaterial der feinen Teilchen aus Siliziumdioxid, Aluminiumoxid, Titanoxid oder Bornitrid gebildet ist und
   hydrophile Gruppen und hydrophobe Gruppen zusammen auf einer Fläche des Basismaterials vorhanden sind, **dadurch gekennzeichnet, dass**
   ein Anteil der feinen Teilchen in dem Harzgemisch zwischen 3 und 15 Massen-% liegt und
   ein Hydrophobierungsverhältnis, das durch die folgende Formel (1) repräsentiert wird, zwischen 20 und 80 Mol-% liegt;

$$\text{Hydrophobierungsverhältnis (Mol-\%)} = 100\{M_A/(M_A + M_{OH})\},$$

   wobei $M_A$ eine Mol-Anzahl von hydrophoben Gruppen an der Fläche der feinen Teilchen ist,
   und $M_{OH}$ eine Mol-Anzahl von hydrophilen Gruppen an der Fläche der feinen Teilchen ist, so dass die feinen Teilchen mehrere fadenförmige Agglomerate bilden und die Agglomerate eine dendritische Struktur besitzen, wenn das Epoxidharz, das Härtungsmittel und die feinen Teilchen gemischt und gehärtet werden, wobei das Harzgemisch ferner einen stark wärmeleitenden Füllstoff enthält, der Bornitrid und/oder Aluminiumnitrid und/oder Aluminiumoxid enthält.

2. Harzgemisch für die elektrische Isolierung nach Anspruch 1,
   wobei die hydrophile Gruppe eine Hydroxylgruppe ist und die hydrophobe Gruppe eine Alkylgruppe von 1 bis 8 Kohlenstoffatomen ist.

3. Spule, die umfasst:

   laminierte leitende Drähte; und
   eine Isolierschicht, die ihren Umfang bedeckt,
   wobei die Isolierschicht eine Glimmerschicht, eine Verstärkungsmaterialschicht und eine Schicht gehärtetes Harz umfasst,
   wobei die Schicht gehärtetes Harz eine Schicht ist, die aus einem gehärteten Harz für eine elektrische Isolierung mit der Zusammensetzung nach einem der Ansprüche 1 oder 2 gebildet ist,
   wobei das gehärtete Harz für eine elektrische Isolierung ein Material ist, das durch Mischen und Härten des Epoxidharzes, der Härtungsmittels und der feinen Teilchen gebildet wird.

4. Spule nach Anspruch 3,
   wobei das gehärtete Harz ferner einen stark wärmeleitenden Füllstoff enthält.

5. Spule nach Anspruch 3 oder 4,
   wobei die Glimmerschicht wiederhergestellten Glimmer oder Spaltglimmer und das gehärtete Harz enthält.

6. Spule nach einem der Ansprüche 4 bis 5
   wobei die Verstärkungsmaterialschicht ein Glasgewebe, einen nicht gewebten Glasstoff, einen nicht gewebten Polyesterstoff, eine Polyesterschicht oder eine Polyimidschicht und das gehärtete Harz enthält.

7. Stator mit der Spule nach einem der Ansprüche 3 bis 6.

8. Rotierende Maschine, die die Spule nach einem der Ansprüche 3 bis 7 besitzt.

**Revendications**

1. Composition de résine pour isolation électrique comprenant :

   une résine époxy ;
   un agent de durcissement ; et
   des fines particules,
   dans laquelle un matériau de base des fines particules est formé de dioxyde de silicium, d'oxyde d'aluminium, d'oxyde de titane, ou de nitrure de bore, et des groupes hydrophiles et des groupes hydrophobes sont présents ensemble sur une surface du matériau de base,
   **caractérisée en ce que**
   un pourcentage des fines particules dans la composition de résine est de 3 à 15 % en masse, et
   un rapport d'hydrophobie représenté par la formule suivante (1) est de 20 à 80 moles % :

   $$\text{rapport d'hydrophobie (moles \%)} = 100[M_A/(M_A + M_{OH})] \qquad (1),$$

   dans laquelle $M_A$ est un nombre de moles de groupes hydrophobes à la surface des fines particules, et $M_{OH}$ est un nombre de moles de groupes hydrophiles à la surface des fines particules, de sorte que les fines particules forment d'une pluralité d'agglomérats semblables à des fils et les agglomérats ont une structure dendritique quand la résine époxy, l'agent de durcissement, et les fines particules sont mélangés et durcis,
   dans laquelle la composition de résine contient en outre une charge fortement thermoconductrice contenant au moins un élément parmi nitrure de bore, nitrure d'aluminium et alumine.

2. Composition de résine pour isolation électrique selon la revendication 1, dans laquelle le groupe hydrophile est un groupe hydroxyle et le groupe hydrophobe est un groupe alkyle ayant 1 à 8 atomes de carbone.

3. Bobine comprenant
   des fils conducteurs stratifiés ; et
   une couche d'isolation couvrant la périphérie de ceux-ci,
   dans laquelle la couche d'isolation inclut une couche de mica, une couche de matériau de renforcement et une couche de résine durcie,
   la couche de résine durcie et une couche formée d'une résine durcie pour isolation électrique ayant la composition définie dans l'une quelconque des revendications 1 ou 2,
   ladite résine durcie pour isolation électrique est un matériau formé en mélangeant et en durcissant la résine époxy, l'agent de durcissement, et les fines particules.

4. Bobine selon la revendication 3,
   dans laquelle la résine durcie contient en outre une charge fortement thermoconductrice.

5. Bobine selon la revendication 3 ou 4,
   dans laquelle la couche de mica inclut du mica reconstitué ou des lamelles de mica, et la résine durcie.

6. Bobine selon l'une quelconque des revendications 4 et 5,
   dans laquelle la couche de matériau de renforcement contient un tissu de verre, un textile en verre non-tissé, un textile en polyester non-tissé, un film de polyester, ou un film de polyimide, et la résine durcie.

7. Stator ayant la bobine selon l'une quelconque des revendications 3 à 6.

8. Machine rotative ayant la bobine selon l'une quelconque des revendications 3 à 7.

## FIG. 1

600 nm

## FIG. 2

## FIG. 3A

## FIG. 3B

## FIG. 4

## FIG. 5

## FIG. 6

## FIG. 7

## FIG. 8A

## FIG. 8B

## FIG. 9

## FIG. 10

## FIG. 11A

## FIG. 11B

# FIG. 12

## FIG. 13A

## FIG. 13B

## FIG. 14A

## FIG. 14B

## FIG. 14C

## FIG. 15

PARTICLE DIAMETER OF
HYDROPHILIC NANO-SILICA (nm)

## FIG. 16

PARTICLE DIAMETER OF
HYDROPHOBIC NANO-SILICA (nm)

**EP 2 848 645 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012057121 A
- JP 2000224792 A
- JP H0625512 A